# NEUE EUROPÄISCHE PATENTSCHRIFT

(11) **EP 0 827 470 B2**
(45) Veröffentlichungstag und Bekanntmachung des Hinweises auf die Entscheidung über den Einspruch: **09.03.2005**
(45) Hinweis auf die Patenterteilung: 23.12.1998
(21) Anmeldenummer: 96905676.1
(22) Anmeldetag: 02.03.1996
(51) Int. Cl.: B60T 17/00, B60T 17/02

(54) **DRUCKLUFT-VERSORGUNGSEINRICHTUNG FÜR FAHRZEUG-DRUCKLUFTANLAGEN SOWIE VERFAHREN ZUM STEUERN DER DRUCKLUFT-VERSORGUNGSEINRICHTUNG**
COMPRESSED AIR SUPPLY SYSTEM FOR VEHICLE COMPRESSED AIR INSTALLATIONS AND PROCESS FOR CONTROLLING SAID SYSTEM
DISPOSITIF D'ALIMENTATION EN AIR COMPRIME POUR SYSTEMES D'AIR COMPRIME POUR VEHICULES ET PROCEDE DE COMMANDE DE CE DISPOSITIF

(30) Priorität: 29.04.1995 DE 19515895
(43) Veröffentlichungstag der Anmeldung: 11.03.1998
(73) Patentinhaber: KNORR-BREMSE SYSTEME FÜR NUTZFAHRZEUGE GMBH, 80809 München (DE)
(72) Erfinder: BRÜHMANN, Werner, D-70499 Stuttgart (DE); ALT, Matthias, D-26127 Oldenburg (DE)
(74) Vertreter: Seemann, Ralph, Dr. Dipl.-Phys.
(86) Internationale Anmeldenummer: PCT/DE1996/000366
(87) Internationale Veröffentlichungsnummer: WO 1996/034785

(56) Entgegenhaltungen:
- EP-A- 0 463 329
- EP-A- 0 523 194
- EP-A- 0 689 117
- WO-A-94/07726
- DD-A- 257 743
- DE-A- 2 950 904
- DE-A- 4 022 671
- DE-A- 4 030 361
- FR-A- 2 658 251
- VDI Berichte 1188 "Das sichere Nutzfahrzeug" 23./24. März 1995 , Seiten 119 - 139

## Beschreibung

### Stand der Technik

Die Erfindung betrifft eine Druckluftversorgungseinrichtung für Fahrzeug-Druckluftanlagen nach dem Oberbegriff des Anspruchs 1. Gegenstand der Erfindung ist außerdem ein Verfahren zum Steuern einer solchen Druckluft-Versorgungseinrichtung nach dem Oberbegriff des Anspruchs 14.

Aus EP 0 523 194 B1 ist eine derartige Druckluft-Versorgungseinrichtung für Fahrzeug-Druckluftanlagen bekannt. Dort ist ein abschaltbarer Luftkompressor vorgesehen, um Druckluft über einen Lufttrockner in einen Vorratsbehälter zu fördern. Ein am Vorratsbehälter angeordneter Drucksensor überwacht den Druck der eingesteuerten Luft. Sein Druckwert wird von einer Steuerelektronik ausgewertet, um den Luftkompressor ein- und auszuschalten. Außerdem wird die Feuchtigkeit der Luft in der Anlage sensiert und von der Steuerelektronik die Regeneration des Lufttrockners druckund feuchtigkeitsabhängig gesteuert. Über die weitere Gestaltung der Drucktuftanlage und die Absicherung des Druckluftvorrats sind in der EP 0 523 194 B1 keine Angaben enthalten.

Nationale Regeln und internationale Richtlinien verlangen bei Fahrzeug-Druckluftanlagen das Vorhandensein mehrerer Druckluft-Verbraucherkreise, um bei Ausfall eines Bremskreises die Funktion der Bremsanlage hilfsweise aufrechtzuerhalten. Außerdem ist eine gegenseitige Absicherung der Kreise vorgeschrieben, damit bei Ausfall eines Kreises die Funktion des unbeschädigten Kreises erhalten bleibt. Es werden daher ausgangsseitig des Lufttrockners der Druckluftanlage Überströmventile mit begrenzter Rückströmung angeordnet, welche zu mehreren in einem Schutzventil zusammengefaßt sind, beispielsweise gemäß DE 42 09 034 A1. Neben der Aufgabe, die Druckluft auf die verschiedenen Verbraucherkreise zu verteilen und diese gegeneinander bei Ausfall eines Kreises sowie gegen Ausfall des Luftkompressors abzusichern, ist hier außerdem die vorrangige Befüllung ausgewählter Verbraucherkreise sichergestellt. Bei derartigen Überströmventilen sind der anlagenspezifische Öffnungsund Schließdruck aufgrund konstruktiver Gegebenheiten fest eingestellt und beim Betrieb der Fahrzeug-Druckluftanlage einer Einwirkung von außen entzogen.

### Vorteile der Erfindung

Die erfindungsgemäße Druckluft-Versorgungseinrichtung mit den kennzeichnenden Merkmalen des Anspruchs 1 hat demgegenüber den Vorteil, daß die Zufuhr von Druckluft in die Verbraucherkreise und die Entnahme von Druckluft aus einem Kreis zur Überleitung in einen anderen Kreis oder zum Zwecke der Regeneration des Lufttrockners fahrzeugspezifisch oder in Abhängigkeit von den Betriebsbedingungen der Druckluftanlage oder des Fahrzeugs von der programmierbaren Steuerelektronik ausgewählt und gesteuert bzw. geregelt werden kann. Damit lassen sich gegenüber der bisherigen "starren", d. h. festgelegten Betriebsweise der Druckluft-Versorgungseinrichtung eine schnellere Betriebsbereitschaft der Druckluftanlage, eine Energieeinsparung beim Betrieb des Luftkompressors, eine höhere Sicherheit gegen Druckluftverlust bei einem schadhaften Kreis, eine Befüllung der Verbraucherkreise auf unterschiedliche, veränderbare Druckwerte und eine wirtschaftliche, bedarfsgerechte Regeneration des Lufttrockners erzielen. Um die Druckluft-Versorgungseinrichtung an unterschiedliche Fahrzeug-Druckluftanlagen oder veränderten Betriebsbedingungen anzupassen, bedarf es lediglich eines Eingriffs in die Steuerelektronik durch Einfügen bzw. Ändern eines entsprechenden Steuerelements.

Durch die in den Unteransprüchen 2 und 3 aufgeführten Maßnahmen sind vorteilhafte Weiterbildungen und Verbesserungen der im Anspruch 1 angegebenen Drukluft-Versorgungseinrichtung möglich.

Mit der gerätemäßig außerordentlich einfachen Ausstattung der Druckluft-Versorgungseinrichtung werden die vorgenannten Vorteile erzielt, ohne dabei die Betriebssicherheit zu gefährden, da die vorgeschlagenen Sperrglieder, die Drucksensoren und die Steuerelektronik eine hohe Funktionssicherheit besitzen.

Gemäß der Erfindung wird die bewährte pneumatisch-mechanische Absicherung der Druckluftanlage gemäß DE 42 09 034 A1 beibehalten.

Mit den in den Ansprüchen 2 und 3 angegebenen Maßnahmen ist es auf einfache Weise mittels der den Zustand der Druckluftanlage überwachenden Steuerelektronik möglich, bedarfsgerecht sowie nach wirtschaftlichen Kriterien den Luftkompressor in Betrieb zu setzen bzw. die Druckluftförderung ein- oder auszuschalten. Dabei kann gemäß der Erfindung nach Anspruch 13 die Steuerelektronik Daten nutzen, welche den Betriebszustand des Antriebsmotors des Fahrzeugs kennzeichnen.

Das mit erfindungsgemäßen Verfahrensschritten gekennzeichete Verfahren nach Anspruch 4 zum Steuern einer Druckluft-Versorgungseinrichtung für Fahrzeug-Druckluftanlagen nach Anspruch 1 zeichnet sich mit Vorteil dadurch aus, daß mittels der Steuerelektronik Einfluß auf den versorgungsseitigen Drucklufthaushalt in der Fahrzeug-Druckluftanlage genommen werden kann, derart, daß druck- und damit auch verbrauchsabhängig die Einsteuerung von Druckluft in gegebenenfalls verschiedenen Zwecken dienende Verbraucherkreise nach logischen Kriterien erfolgt.

Durch die in den Unteransprüchen 15 bis 19 aufgeführten Verfahrensmerkmale sind vorteilhafte Weiterentwicklungen des im Anspruch 4 angegebenen Verfahrens möglich.

So kann gemäß der Maßnahme nach Anspruch 5 beispielsweise die Forderung von die Betriebserlaubnis des Fahrzeugs betreffenden Vorschriften erfüllt werden.

Mit dem im Anspruch 6 angegebenen Verfahrensmerkmal kann z. B. die Betriebsbereitschaft des Fahrzeugs beschleunigt herbeigeführt werden.

Des weiteren ist es in vorteilhafter Weise nach dem Verfahrensschritt gemäß Anspruch 7 möglich, einen anderen Verbraucherkreis vor erhöhter Druckbelastung zu schützen, wenn der ausgewählte Kreis einen höheren Betriebsdruck erfordert oder einen erhöhten Druckluftverbrauch hat, beispielsweise für die Luftfederung des Fahrzeugs.

Mit dem Verfahrensmerkmal nach Anspruch 8 kann auf einfache Weise das kurzzeitige Einschalten des Luftkompressors vermieden werden.

Durch die im Anspruch 9 gekennzeichnete Maßnahme wird beispielsweise bei einem undichten oder leckgeschlagenen Verbraucherkreis während des weiteren Betriebs der Druckluftanlage ein Druckluftverlust sowie eine erhöhte Belastung der Druckluft-Versorgungseinrichtung vermieden.

Zweckmäßigerweise wird ein derartiger Zustand der Druckluftanlage dem Fahrer des Fahrzeugs gemäß Anspruch 10 zur Kenntnis gebracht, damit Maßnahmen zur Beseitigung der Störung ergriffen werden können.

Von wesentlichem Vorteil für den wirtschaftlichen Betrieb des Fahrzeugs ist der letzte Verfahrensschritt nach Anspruch 4, weil gegenüber der üblichen Betriebsweise der Druckluft-Versorgungseinrichtung weitere Kriterien Anwendung finden können, beispielsweise, ob der Antriebsmotor des Fahrzeugs auf hohem Leistungsniveau betrieben wird und demzufolge ein Zu-schalten des Luftkompressors nicht angeraten ist.

So wird zweckmäßigerweise die Maßnahme nach Anspruch 11 zur Anwendung gebracht, um die dem Fahrzeug innewohnende kinetische Energie für den Antrieb des Luftkompressors zu nutzen.

Für den Betrieb des Luftkompressors können die in den Ansprüchen 12 bis 14 beschriebenen Verfahrensmerkmale genutzt werden, indem bei Nichtbedarf entweder die geförderte Druckluft zu einer Entlastungsstelle abgesteuert oder der Luftkompressor bedarfsweise vom Antrieb abgekuppelt oder die Luftförderung des angetriebenen Luftkompressors von der Steuerelektronik abgeschaltet wird. Dabei sind die Maßnahmen nach den Ansprüchen 13 und 14 wirtschaftlicher Hinsicht besonders vorteilhaft.

Die im Anspruch 15 angegebene Verfahrensweise ist vom Gesichtspunkt der Druckluftverbrauchsbilanz her von Vorteil, weil hierdurch in den Verbraucherkreisen auftretender unterschiedlicher Bedarf an Druckluft von der Steuerelektronik ausgeglichen werden kann.

Mit dem Verfahrensmerkmal nach Anspruch 16 wird in vorteilhafter Weise zur Regeneration des Lufttrockners besonders trockene Druckluft genutzt, so daß das benötigte Regenerationsluftvolumen relativ klein gehalten werden kann.

Anstelle der vorbeschriebenen Maßnahmen kann gemäß Anspruch 17 bekannter Weise die Regeneration des Lufttrockners durch Entnahme von Regenerationsluft aus einem separaten Behälter erfolgen.

Durch entsprechende Programmierung der Steuerelektronik sind unterschiedliche, im Anspruch 18 angegebene Betriebsweisen für die Regenerationssteuerung möglich.

Schließlich ist es mit Vorteil bei Anwendung der in Anspruch 19 gekennzeichneten Verfahrensschritte möglich, den Lufttrockner für die folgende Inbetriebnahme des Fahrzeugs mit voller Trocknungskapazität bereitzustellen und durch Ausblasen von Wasseransammlungen im Bereich des Sicherheitsventils mit der zur Entlastungsstelle abgesteuerten Regenerationsluft das Einfrieren des Ventils zu verhindern. Eine elektrische Beheizung des Sicherheitsventils ist daher gegebenenfalls entbehrlich.

### Zeichnung

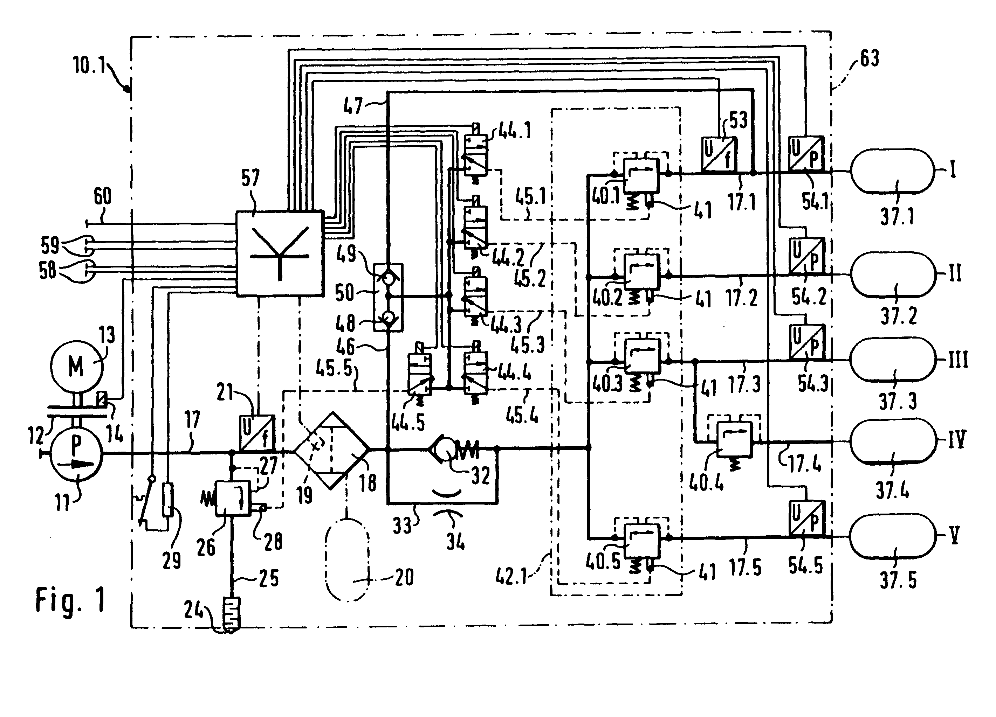

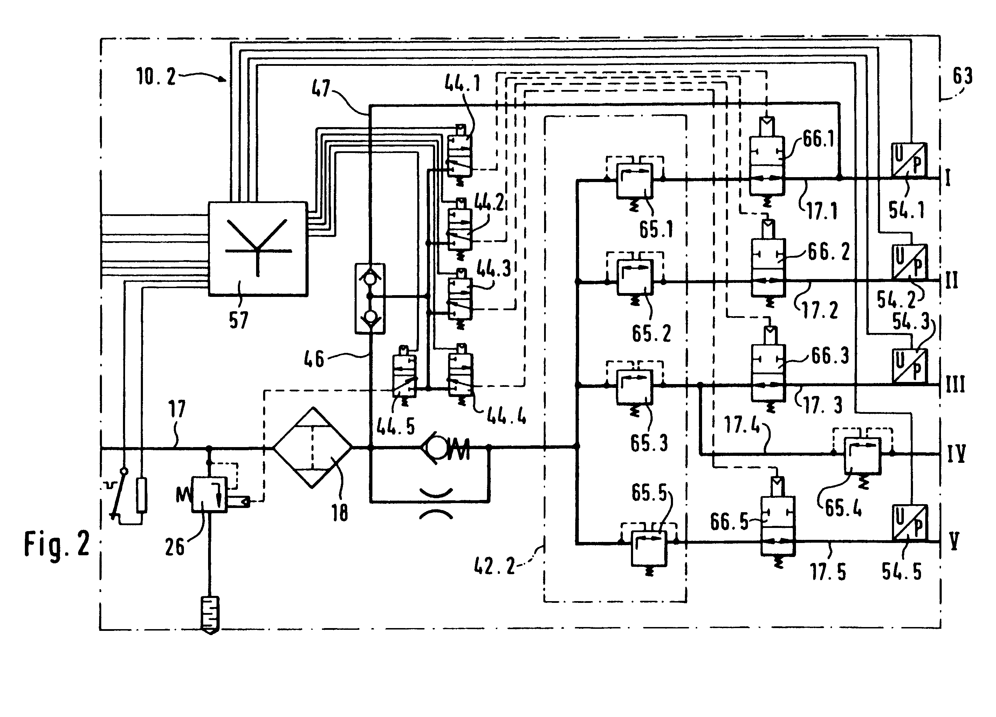

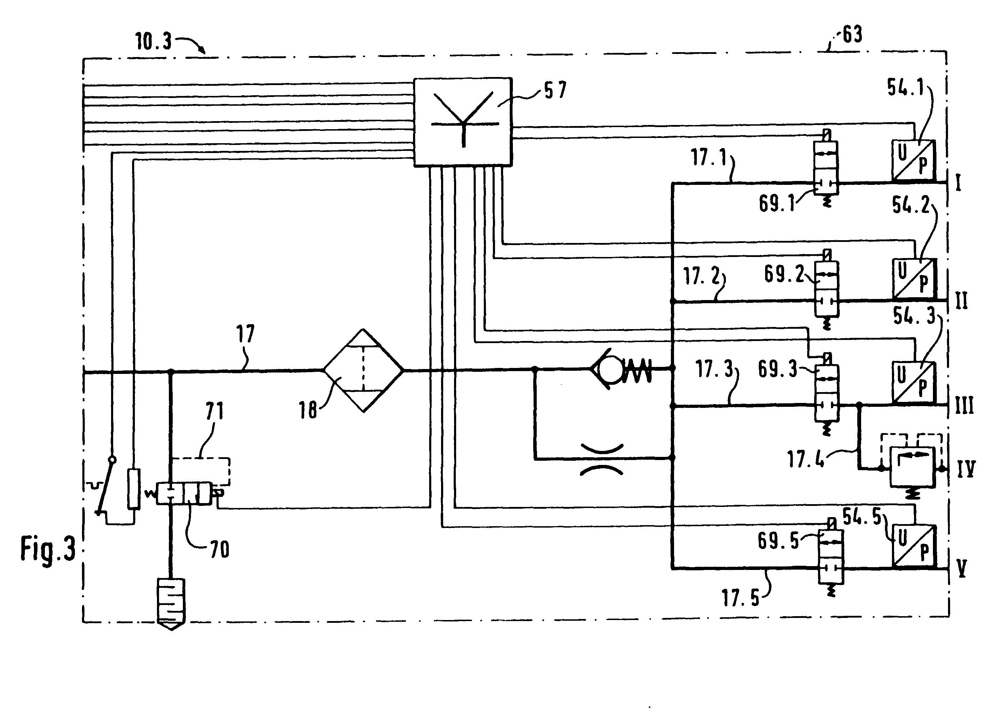

Ein Ausführungsbeispiel der Erfindung ist in der Fig. 2 vereinfacht dargestellt und in der nachfolgenden Beschreibung näher erläutert Nicht umfasst vom Schutzumfang sind die Ausführen gebeispiele der Figuren 1 und 3. Es zeigen Figur 1 ein Schaltschema einer Druckluft-Versorgungseinrichtung mit einem steuerbaren Überströmventil in den Verbraucherkreisen, Figur 2 ein Schaltschema entsprechend Figur 1 mit in Reihe angeordnetem Überströmventil sowie schaltbarem Sperrglied in den Verbraucherkreisen und Figur 3 ein Schaltschema einer Druckluft-Versorgungseinrichtung lediglich mit einem schaltbaren Sperrglied in den Verbraucherkreisen.

### Beschreibung der Figuren und des Ausführungsbeispiels

Die in Figur 1 der Zeichnung schematisch wiedergegebene Druckluft-Versorgungseinrichtung 10.1 für Fahrzeug-Druckluftanlagen ist zur Verwendung vorzugsweise in Nutzfahrzeugen bestimmt. Die Einrichtung 10.1 weist einen Druckluftkompressor 11 auf, welcher über eine Schaltkupplung 12 mit dem Antriebsmotor 13 des Fahrzeugs gekuppelt ist. Die Kupplung 12 ist elektrisch gesteuert schaltbar; es ist daher ein entsprechendes Betätigungsmittel 14 dargestellt.

Vom Luftkompressor 11 führt eine Förderleitung 17 zu einem regenerierbaren Lufttrockner 18. An den Lufttrockner 18 kann ein Feuchtesensor 19 zum Messen der im Granulat des Trockners aufgenommenen Feuchtigkeit angeschlossen sein, welche der vom Luftkompressor 11 geförderten Druckluft entzogen wird. An den Lufttrockner 18 kann außerdem ein Behälter 20 zum Speichern von Regenerationsluft angeschlossen sein, welche beim Entfeuchten des im Gegenstromverfahren regenerierbaren Granulats dem Lufttrockner zugeführt wird. Außerdem kann an die Förderleitung 17 zwischen dem Luftkompressor 11 und dem Lufttrockner 18 ein Feuchtesensor 21 angeschlossen sein, mit dem der Wassergehalt sowohl der vom Luftkompressor 11 geförderten Druckluft als auch der aus dem Lufttrockner 18 abgeleiteten Regenerationsluft überwachbar ist.

Von der Förderleitung 17 geht zwischen dem Luftkompressor 11 und dem Lufttrockner 18 eine zu einer Druckentlastungsstelle 24 führende Stichleitung 25 aus. In dieser befindet sich ein Sicherheitsventil 26 in der Bauform des Druckbegrenzungsventils, welches über eine Steuerleitung 27 betätigt den maximalen Systemdruck in der Fahrzeug-Druckluftanlage begrenzt. Darüber hinaus ist das Sicherheitsventil 26 durch ein zusätzliches Betätigungsmittel 28 pneumatisch in die Durchlaßstellung schaltbar. Um das Sicherheitsventil 26 gegen Einfrieren zu schützen, ist eine elektrische Heizung 29 vorgesehen.

Die Förderleitung 17 ist nach dem Lufttrockner 18 in fünf Leitungszweige 17.1 bis 17.5 fortgesetzt. Ausgangsseitig des Lufttrockners 18 befindet sich in der Förderleitung 17 ein federbelastetes Rückschlagventil 32, das in Richtung auf den Lufttrockner 18 die Förderleitung sperrt. Das Rückschlagventil 32 ist von einer Bypassleitung 33 mit einer Drosselstelle 34 umgangen, welche eine gedrosselte Rückströmung von Luft zum Lufttrockner 18 für Regenerierzwecke gestattet.

Die Förderleitungszweige 17.1 bis 17.5 stehen mit DruckluftVerbraucherkreisen I bis V der Fahrzeug-Druckluftanlage in Verbindung (von den Verbraucherkreisen I bis V ist lediglich ein Druckluft-Vorratsbehälter 37.1 bis 37.5 dargestellt). Die Verbraucherkreise I und II sind Betriebsbremskreise und gehören wie der einen Feststellbremskreis bildende Verbraucherkreis III zur Bremsanlage des Fahrzeugs. Der Kreis IV ist ein Nebenverbraucherkreis und der Verbraucherkreis V ein Luftfederkreis.

In jedem der Förderleitungszweige 17.1 bis 17.5 befindet sich in Förderrichtung vor den Vorratsbehältern 37.1 bis 37.5 der Druckluft-Verbraucherkreise I bis V je ein Überströmventil 40.1 bis 40.5 mit begrenzter Rückstömung. Diese Überströmventile 40.1 bis 40.5 dienen der Druckluftversorgung und Druckabsicherung der angeschlossenen Druckluft-Verbraucherkreise I bis V, wobei unter Druckluftversorgung die Abgabe von mit dem Luftkompressor 11 geförderter und im Lufttrockner 18 getrockneter Druckluft an die Verbraucherkreise verstanden wird. Abweichend von dem im Förderleitungszweig 17.4 liegenden Überströmventil 40.4 sind die Überströmventile 40.1 bis 40.3 sowie 40.5 als schaltbare Sperrglieder ausgebildet, welche durch ein zusätzliches Betätigungsmittel 41, in eine den zugeordneten Leitungszweig sperrende Stellung schaltbar sind. Beim in Figur 1 dargestellten Schaltschema ist dies ein pneumatisches Betätigungsmittel 41, das bei der aus DE 42 09 034 A1 bekannten Ausführungsform des Überströmventils eine mit Steuerluft beaufschlagbare Steuerkammer sein kann, in der sich eine einen Manschettenkolben in Schließrichtung belastende Druckfeder befindet. In Abwandlung kann das Betätigungsmittel 41 auch ein elektromagnetisches oder elektromechanisches sein. Die als Sperrglied ausgebildeten Überströmventile 40.1 bis 40.3 sowie 40.5 können, wie mit strichpunktierter Umrandung angedeutet, in der Bauform des Vierkreisschutzventils 42.1 vereinigt sein.

Die pneumatischen Betätigungsmittel 41 sind jeweils durch ein Vorsteuerventil 44.1 bis 44.4, welches als 3/2-Wegeventil ausgebildet ist, schaltbar. Außerdem ist ein fünftes Vorsteuerventil 44.5 der gleichen Bauform vorgesehen, um das Sicherheitsventil 26 über dessen Betätigungsmittel 28 schalten zu können. Die Vorsteuerventile 44.1 bis 44.5 nehmen federbetätigt eine Stellung ein, in welcher ein zum jeweiligen Betätigungsmittel 41 bzw. 28 führender Steuerleitungszweig 45.1 bis 45.5 zur Atmosphäre entlüftet ist. In ihrer zweiten, elektromagnetisch betätigten Stellung sind dagegen die Steuerleitungszweige 45.1 bis 45.5 durchgeschaltet. Für die Bereitstellung von Steuerdruck sind die Steuerleitungszweige 45.1 bis 45.5 sowohl über eine Steuerleitung 46 abströmseitig des Lufttrockners 18 an die Förderleitung 17 als auch über eine Steuerleitung 47 zwischen dem Überströmventil 40.1 und dem Vorratsbehälter 37.1 an den Förderleitungszweig 17.1 des Druckluft-Verbraucherkreises I angeschlossen. Die beiden Steuerleitungen 46 und 47 sind gegeneinander durch Ruckschlagventile 48 und 49 abgesichert, welche in einem Wechselventil 50 vereinigt sein können. Je nach Betriebsweise der Druckluft- Versorgungseinrichtung 10.1 kann es auch ausreichend sein, lediglich die Steuerleitung 46 oder die Steuerleitung 47 vorzusehen. Die Rückschlagventile 48 und 49 sind dann entbehrlich.

Zur Druckluft-Versorgungseinrichtung 10.1 gehört noch ein Feuchtesensor 53, der zwischen dem Überströmventil 40.1 und dem Vorratsbehälter 37.1 an den Förderleitungszweig 17.1 des Druckluft-Verbraucherkreises I angeschlossen ist. Außerdem sind zwischen dem entsprechenden Überströmventil 40.1 bis 40.3 und 40.5 sowie dem zugeordneten Vorratsbehälter 37.1 bis 37.3 sowie 37.5 an den entsprechenden Förderleitungszweig 17.1 bis 17.3 sowie 17.5 angeschlossene Drucksensoren 54.1 bis 54.3 sowie 54.5 für die Überwachung des Druckes in den Druckluft-Verbraucherkreisen I bis III sowie V vorgesehen.

Bestandteil der Druckluft-Versorgungseinrichtung 10.1 ist ferner eine Elektronik 57, welche entsprechend ihrer Programmierung Steuer- und Regelfunktionen ausführt und nachfolgend als Steuerelektronik bezeichnet ist. An die Steuerelektronik 57 sind das Betätigungsmittel 14 der Schaltkupplung 12, die Feuchtsensoren 19, 21 und 53, die Vorsteuerventile 44.1 bis 44.5 sowie die Drucksensoren 54.1 bis 54.3 sowie 54.5 angeschlossen. Die Spannungsversorgung der Steuerelektronik 57 erfolgt über Leitungen 58. Die Steuerelektronik 57 ist über einen Datenbus 59 mit der Motorsteuerung des Fahrzeugs verbunden; außerdem führt eine Leitung 60 zu einer Zustandsanzeige der Druckluft-Versorgungseinrichtung 10.1 im Fahrerhaus des Fahrzeugs.

Sämtliche zwischen dem Luftkompressor 11 und den Druckluftvorratsbehältern 37.1 bis 37.5 befindlichen Elemente der Druckluft-Versorgungseinrichtung 10.1 können in einer Geräteeinheit 63 zusammengefaßt sein, wie dies in Figur 1 mit einer strichpunktierten Umrandung angedeutet ist. Die Druckluft-Versorgungseinrichtung 10.1 hat folgende Funktionen:

Die Ventile der Druckluft-Versorgungseinrichtung 10.1 nehmen die in Figur 1 dargestellten Stellungen ein, und der mit seinem Antriebsmotor 13 gekuppelte Luftkompressor 11 fördert Druckluft in die Förderleitung 17. Die Luft wird beim Durch-strömen des Lufttrockners 18 entfeuchtet und gelangt nach Überwindung des Rückschlagventils 32 in die Förderleitungszweige 17.1 bis 17.3 sowie 17.5. Zugleich strömt Druckluft durch die Steuerleitung 46 zu den Drucksteuerventilen 44.1 bis 44.5. Mit Überschreiten des Öffnungsdruckes der Überströmventile 40.1 bis 40.3 und 40.5 strömt Druckluft in die Vorratsbehälter 37.1 bis 37.3 sowie 37.5 der Druckluft-Verbraucherkreise I bis III sowie V und ferner nach Öffnen des Überströmventils 40.4 durch den Förderleitungszweig 17.4 zum Druckluft-Vorratsbehälter 37.4 des Nebenverbraucherkreises IV. Die Öffnungsdrücke der Überströmventile 40.1 bis 40.3 und 40.5 können durch mechanische Justierung derart eingestellt sein, daß die beiden Kreise I und II vor den anderen Kreisen III bis V gefüllt werden. Mit der Inbetriebnahme des Fahrzeugs wird der Druck in den Verbraucherkreisen I bis III sowie V von der Steuerelektronik 57 mit den Drucksensoren 54.1 bis 54.3 und 54.5 ständig überwacht. Entsprechend der Programmierung der Steuerelektronik 57 kann daher druckabhängig auf die Befüllung der Druckluft-Verbraucherkreise I bis V Einfluß genommen werden. So kann beispielsweise bei gleicher Einstellung des Öffnungsdruckes der Überströmventile 40.1 bis 40.3 sowie 40.5 eine bevorrechtigte Befüllung der Verbraucherkreise I und II dadurch erreicht werden, daß durch Umschalten der Vorsteuerventile 44.3 und 44.4 in ihre magnetbetätigte Stellung Steuerluft in die pneumatischen Betätigungsmittel 41 der Überströmventile 40.3 und 40.5 geschaltet wird, so daß diese ihre Sperrstellung einnehmen. Die beiden Überströmventile 40.3 und 40.5 wirken jetzt als Sperrglied, welches die zugeordneten Verbraucherkreise III und IV bzw. V von der Druckluftversorgung abtrennt. Mit Erreichen des Betriebsdruckes in den Verbraucherkeisen I und II wird von der Steuerelektronik 57 die Absperrung der übrigen Kreise durch Umschalten der Vorsteuerventile 44.3 und 44.4 in ihre federbetätigte Stellung aufgehoben. Die Verbraucherkreise III bis V werden nun mit Druckluft aufgefüllt.

Zum Füllen des Luftfederkreises V auf einen gegenüber den anderen Kreisen I bis IV höheren Betriebsdruck schaltet die Steuerelektronik 57 die Überströmventile 40.1 bis 40.3 in ihre die Druckluftversorgung absperrende Stellung. Die vom Luftkompressor 11 gelieferte Druckluft wird daher nun nur in den Druckluft-Verbraucherkreis V gefördert. Mit Erreichen des vom Drucksensor 54.5 überwachten Betriebsdruck des Kreises V, der unterhalb des Abschaltdruckes des Sicherheitsventils 26 liegt, kann, bei gefüllten übrigen Kreisen, die Förderung des Luftkompressors 11 abgeschaltet werden. Um das erhöhte Druckniveau im Luftfederkreis V zu halten, wird das Überströmventil 40.5 durch Einsteuern von Steuerluft in sein Betätigungsglied 41 in die Sperrstellung geschaltet. Nehmen alle Überströmventile 40.1 bis 40.3 und 40.5 ihre Sperrstellung ein, so kann bei abgeschalteter Luftförderung Steuerluft mit der Steuerleitung 47 aus dem Kreis I entnommen werden.

Durch die an die Kreise I bis V angeschlossenen Verbraucher wird Druckluft in unterschiedlichem Ausmaß verbraucht. Bei von der Steuerelektronik 57 aufge hobener Sperrstellung der Überströmventile 40.1 bis 40.3 kann ein Druckausgleich zwischen den Kreisen I bis IV stattfinden, solange der Schließdruck des jeweiligen Überströmventils nicht unterschritten wird. Durch Beibehalten der Sperrstellung des entsprechenden Überströmventils kann die Steuerelektronik 57 auch andere Kreise als den Luftfederkreis V vom Druckluftaustausch ausschließen. Erkennt die Steuerelektronik 57, daß der bei aufgefülltem Druckluft-Verbraucherkreis erreichte Begrenzungsdruck durch Druckluftverbrauch um eine programmierte Druckdifferenz gefallen ist, so wird die Druckluftversorgung dieses Kreises aufgenommen. Unterliegen beispielsweise die beiden Betriebsbremskreise I und II bei Bergabfahrt des Fahrzeugs durch länger dauernde Bremsungen einem erhöhten Druckluftverbrauch, so werden die übrigen Kreise III bis V von der Druckluftversorgung ausgeschlossen und bevorzugt die beiden Betriebsbremskreise I und II durch Luftförderung aufgefüllt. Mit Erreichen ihres Begrenzungsdruckes werden die Kreise I und II abgetrennt und gegebenenfalls andere Kreise aufgefüllt.

Man erkennt also, daß die Druckluftversorgung der DruckluftVerbraucherkreise I bis V durch entsprechende Programmierung der Steuerelektronik 57 bezüglich der Erstbefüllung, der Aufeinanderfolge der Befüllung der Kreise, der Einstellung unterschiedlicher Betriebsdrücke, des Ausgleichs unterschiedlichen Druckluftverbrauchs in den Kreisen sowie des Wiederauffüllens der Kreise in weiten Grenzen variiert werden kann. Kriterien für die Programmierung können beispielsweise die Fahrzeugart, die Ausstattung des Fahrzeugs und dessen Betriebsweise sein.

Durch entsprechende Programmierung der Steuerelektronik 57 kann die Arbeitsweise des Luftkompressors 11 gesteuert werden. So kann die Steuerelektronik 57 den Luftkompressor 11 bei Schiebebetrieb des Fahrzeugs einschalten, um zum Auffüllen der Druckluft-Verbraucherkreise I bis V die kinetische Energie des Fahrzeugs zu nutzen. Diese kann zum Füllen eines Kreises auf ein gegenüber dem Betriebsdruck höheres Druckniveau genutzt werden, um anschließend bei Bedarf andere Kreise mit niedrigerem Solldruck aus diesem Kreis mit Druckluft aufzufüllen. Wird dagegen die volle Leistung des Antriebsmotors 13 zum Vortrieb des Fahrzeugs benötigt, schaltet die Steuerelektronik 57 durch Ansteuern des elektromagnetischen Betätigungsmittels 14 den Luftkompressor 11 durch Trennen der Schaltkupplung 12 ab. Fällt jedoch in diesen Fahrzustand der Druck in den Betriebsbremskreisen I und II unzulässig tief ab, so wird der Luftkompressor 11 von der Steuerelektronik 57 wieder eingeschaltet.

Besitzt das Fahrzeug keine Schaltkupplung 12 zwischen dem Antriebsmotor 13 und dem Luftkompressor 11, so kann dieser in Leerlaufbetrieb geschaltet werden, indem die Steuerelektronik 57 durch Umschalten des Vorsteuerventils 44.5 Steuerluft in das Betätigungsmittel 28 des Sicherheitsventils 26 einsteuert und dieses in seine Durchlaßstellung schaltet. Die vom Luftkompressor 11 geförderte Luft wird jetzt durch das Sicherheitsventil 26 zur Druckentlastungsstelle 24 abgesteuert. Wirtschaftlicher ist es jedoch, wenn der Luftkompressor 11 eine nicht dargestellte Einrichtung aufweist, mit der das Saugventil unwirksam geschaltet oder eine Bypassverbindung zwischen dem Saugraum und dem Verdichtungsraum des Luftkompressors 11 geschaltet werden kann.

Für die Steuerung des Luftkompressors 11 erhält die Steuerelektronik 57 über den Datenbus 59 entsprechende Daten von der Motorsteuerung. Außerdem vermag die Steuerelektronik 57 Informationen an eine im Fahrerhaus des Fahrzeugs angeordnete Zustandanzeige der Druckluftanlage zu leiten, um dem Fahrer anzuzeigen, welche Druckverhältnisse in den DruckluftVerbraucherkreisen I bis V bestehen und ob gegebenenfalls Störungen vorliegen. Wird von der Steuerelektronik 57 bei Unterschreiten oder Nichterreichen einer vorgegebenen Druckschwelle in einem Verbraucherkreis ein Defekt durch z. B. ein Leck erkannt, so wird durch Schalten des entsprechenden Überströmventils in die Sperrstellung der betroffene Verbraucherkreis von der Druckluftversorgung abgetrennt.

Für die Einleitung und Steuerung der Regeneration des Lufttrockners 18 wertet die Steuerelektronik 57 die Signale der Feuchtesensoren 19, 21, 53 aus. Daneben können der Steuerelektronik 57 Daten über Temperatur der geförderten Druckluft, Drehzahl des Luftkompressors 11 und andere zugehen. Die Steuerelektronik 57 ist entsprechend ihrer Programmierung und der Sensorausstattung der Druckluft-Vorsorgungseinrichtung 10.1 eingerichtet, um die Regenerationsdauer des Lufttrockners 18 luftmengenabhängig, druckabhängig, zeitabhängig oder feuchteabhängig zu steuern. Erkennt die Steuerelektronik 57 aufgrund der Meßwerte des Feuchtesensors 53, daß die dem Verbraucherkreis I zugeführte Druckluft einen unzulässig großen Feuchtigkeitsgehalt aufweist, so wird durch Umschalten des Sicherheitsventils 26 bei unwirksamer Luftförderung des Luftkompressors 11 die Regeneration des Lufttrockners 18 eingeleitet. Hierzu kann Druckluft aus den Verbraucherkreisen I bis V herangezogen werden, welche durch die Bypassleitung 33 über die Drosselstelle 34 das Granulat im Lufttrockner 18 in der der Luftförderrichtung entgegengesetzten Richtung durchstromt. Die Regenerationsluft nimmt dabei im Granulat gespeicherte Feuchtigkeit auf und leitet sie über das Sicherheitsventil 26 zur Druckentlastungsstelle 24 ab. Dabei kann durch entsprechendes Schalten der Überstromventale 40.1 bis 40.3 sowie 40.5 sichergestellt werden, daß die Regenerationsluft dem Verbraucherkreis entnommen wird, der das höchste Druckniveau hat. Oder die Regenerationsluft wird dem Verbraucherkreis entnommen, der nach der vorangegangenen Regeneration des Lufttrockners 18 zuerst befüllt wurde, so daß er besonders trockene Luft enthält. Statt dessen kann die Regeneration des Lufttrockners 18 auch durch Entnahme der im Behälter 20 gespeicherten Regenerationsluft erfolgen. Die Dauer der Regeneration kann von der Steuerelektronik 57 beispielsweise zeitabhängig oder in Abhängigkeit vom Druckabfall des die Regenerationsluft bereitstellenden Verbraucherkreises oder durch Sensierung des Feuchtigkeitsgehaltes der aus dem Lufttrockner 18 austretenden Regenerationsluft mittels des Feuchtesensors 21 gesteuert werden. Bei Verwendung des im Trockengranulat befindlichen Feuchtesensors 19 werden Beginn und Ende der Regeneration anhand des Feuchtigkeitsgehalts des Trockengranulats gesteuert.

Außer während des Fahrbetriebs kann eine Regeneration des Lufttrockners von der Steuerelektronik 57 auch nach dem Abstellen des Fahrzeugs gesteuert werden, indem das Sicherheitsventil 26 in seine Durchlaßstellung und im Falle der Regenerationsluftentnahme beispielsweise aus dem Luftfederkreis V die Überströmventile 40.1 bis 40.3 der übrigen Verbraucherkreise I bis IV in die Sperrstellung geschaltet werden. Da bei der Regeneration infolge des Druckabbaus Wasseransammlungen im Bereich des Sicherheitsventils 26 ausgeblasen werden, kann die das Einfrieren des Sicherheitsventils verhütende elektrische Heizung 29 gegebenenfalls entfallen. Nach Abschluß der Regeneration werden von der Steuerelektronik 57 durch Umschalten der Vorsteuerventile 44.1 bis 44.3 sowie 44.5 in ihre federbetätigte Stellung die Überströmventile 40.1 bis 40.3 sowie das Sicherheitsventil 26 in ihre in der Zeichnung wiedergegebene Grundstellung geschaltet. Bei Wiederinbetriebnahme des Fahrzeugs steht der Lufttrockner 18 mit voller Trocknungskapazität zur Verfügung.

Das in Figur 2 dargestellte Ausführungsbeispiel einer Druckluft-Versorgungseinrichtung 10.2 unterscheidet sich gegenüber Fig. 1 im wesentlichen dadurch, daß das Vierkreisschutzventil 42.2 Überströmventile 65.1 bis 65.3 sowie 65.5 ohne zusätzliches Betätigungsmittel enthält. Statt dessen ist in den Förderleitungszweigen 17.1 bis 17.3 sowie 17.5 in Förderrichtung nach den Überstömventilen je ein Sperrglied in Form eines als 2/2-Wegeventil 66.1 bis 66.3 sowie 66.5 verkörperten Absperrventils angeordnet. Das Wegeventil nimmt nicht angesteuert seine federbetätigte Durchlaßstellung ein. Es ist in gleicher Weise wie bei Fig. 1 von der Steuerelektronik 57 mittels der Vorsteuerventile 44.1 bis 44.4 durch pneumatische Betätigung in seine Sperrstellung schaltbar. Das Sperrglied kann auch in Förderrichtung vor den Überströmventilen 65.1 bis 65.3 sowie 65.5 in den Förderleitungszweigen 17.1 bis 17.3 sowie 17.5 angeordnet sein. Die Funktionsweise der ebenfalls mit Drucksensoren 54.1 bis 54.3 und 54.5 ausgestatteten Druckluft-Versorgungseinrichtung 10.2 ist die gleiche wie bei Figur 1.

Die Druckluft-Versorgungseinrichtung 10.3 nach Figur 3 ist dagegen ventil- und steuerungsmäßig gegenüber den beiden Versorgungseinrichtung erheblich vereinfacht. Hier befindet sich in den Förderleitungszweigen 17.1 bis 17.3 sowie 17.5 als schaltbares Sperrglied je ein 2/2-Wegeventil 69.1 bis 69.3 sowie 69.5 mit federbetätigter Sperrstellung. Die Wegeventile sind von der Steuerelektronik 57 unmittelbar durch elektromagnetische Betätigung in ihre Durchlaßstellung schaltbar. Auch diese Druckluft-Versorgungseinrichtung 10.3 kann aufgrund der Drucksensierung in den Verbraucherkreisen I bis III und V mittels der Drucksensoren 54.1 bis 54.3 und 54.5 durch entsprechende Steuerung der Wegeventile 69.1 bis 69.3 sowie 69.5 in entsprechend der ersten Figur angegebener Weise gesteuert werden. Außerdem ist das Sicherheitsventil der Druckluft-Versorgungseinrichtung in Form eines 2/2-Wegeventils 70 ausgebildet, das aus seiner federbetätigten Sperrstellung elektromagnetbetätigt oder elektromechanisch von der Steuerelektronik 57 zum Zwecke der Regenerationssteuerung in die Durchlaßstellung schaltbar ist. Um aus Sicherheitsgründen den höchstzulässigen Druck in der Fahrzeug-Druckluftanlage zu begrenzen, ist das Wegeventil 70 außerdem über eine Steuerleitung 71 pneumatisch in seine Durchlaßstellung schaltbar.

## Patentansprüche

1. Druckluft-Versorgungseinrichtung (10.2) für Fahrzeug-Druckluftanlagen
mit den folgenden Merkmalen:
- es ist ein Luftkompressor (11) vorgesehen, von dessen Ausgang zur Versorgung der Druckluftanlage eine Förderleitung (17) zu einem Lufttrockner (18) führt,
- an die Förderleitung (17) ist ein zu einer Druckentlastungsstelle (24) absteuerndes Sicherheitsventil (26) angeschlossen,
- ausgangsseitig des Lufttrockners (18) ist mit der Förderleitung (17) wenigstens ein Druckluft-Verbraucherkreis (z. B. I) angeschlossen, dessen Druck von einem Drucksensor (54.1) überwacht ist,
- es ist eine Steuerelektronik (57) vorgesehen, an welche der Drucksensor (54.1) sowie wenigstens ein Magnetventil (44.5) für die Steuerung der Regeneration des Lufttrockners (18) angeschlossen sind und welche die Druckluftförderung des Luftkompressors (11) steuert,
**gekennzeichnet durch** die weiteren Merkmale:
- die Förderleitung (17) ist ausgangsseitig des Lufttrockners (18) in zu wenigstens zwei Verbraucherkreisen (z. B. I, V) führende Leitungszweige (17.1, 17.5) verzweigt,
- die Verbraucherkreise (I, V) sind **durch** ein von der programmierbaren Steuerelektronik (57) schaltbares, im jeweiligen Leitungszweig (17.1, 17.5) liegendes Sperrglied von der Druckfuftversorgung abtrennbar, wobei das Sperrglied ein im Leitungszweig (17.1, 17.5) angeordnetes Absperrventil (66.1, 66.5) ist, und wobei dieses ein im Leitungszweig (17.1, 17.5) vor oder nach einem Überströmventil (65.1, 65.5) angeordnetes 2/2-Wegeventil (66.1, 66.5) mit federbetätigter Durchlaßstellung ist und wobei die Steuerelektronik (57) über einen Datenbus (59) mit der Motorsteuerung des Fahrzeugs verbunden ist.

2. Druckluft-Versorgungseinrichtung nach Anspruch 1, **dadurch gekennzeichnet, daß** an die Steuerelektronik (57) ein Betätigungsmittel für eine Kupplung zum Trennen des Luftkompressors von seinem Antriebsmotor angeschlossen ist.

3. Druckluft-Versorgungseinrichtung nach Anspruch 1, **dadurch gekennzeichnet, daß** an die Steuerelektronik (57) ein Betätigungsmittel zum Steuern des Luftkompressors in seine Leerlaufstellung angeschlossen ist.

4. Verfahren zum Steuern einer Druckluft-Versorgungseinrichtung (10.2) für Fahrzeug-Druckluftanlagen nach Anspruch 1, wobei eine Steuerelektronik (57) vorgesehen ist, welche in Abhängigkeit vom Druck in wenigstens einem Druckluft-Verbraucherkreis (z.B. I) die Druckluftversorgung der Druckluftanlage steuert,
**gekennzeichnet durch** die weiteren Merkmale:
- der Druck wird von der Steuerelektronik (57) in wenigstens zwei Verbraucherkreisen (z. B. I, V) überwacht,
- die Steuerelektronik (57) trennt die Verbraucherkreise (I, V) in Abhängigkeit von einem kreisabhängigen, programmierten Begrenzungsdruck von der Druckluftversorgung ab,
- die Steuerelektronik (57) verbindet den jeweiligen Verbraucherkreis (I, V) bei Unterschreiten des Begrenzungsdrucks um eine programmierte Druckdifferenz mit der Druckluftversorgung,
- die Steuerelektronik steuert das Befüllen der Verbraucherkreise (z.B. I, V) in Abhängigkeit vom Druck in den Kreisen sowie vom Fahrzustand des Fahrzeugs.

5. Verfahren nach Anspruch 4, **dadurch gekennzeichnet, daß** die Steuerelektronik (57) einen Verbraucherkreis (z. B. I) für die Befüllung mit Druckluft auswählt, während der andere Verbraucherkreis (V) oder die weiteren Verbraucherkreise (II bis V) von der Befüllung zeitweise abgetrennt sind.

6. Verfahren nach Anspruch 5, **dadurch gekennzeichnet, daß** die Steuerelektronik (57) die Verbraucherkreise (I bis V) in einer programmierten Reihenfolge mit der Druckluftversorgung verbindet.

7. Verfahren nach Anspruch 5, **dadurch gekennzeichnet, daß** ein von der Steuerelektronik (57) ausgewählter Verbraucherkreis (V) auf einen höheren Druck aufgefüllt wird als der wenigstens eine andere Verbraucherkreis (I).

8. Verfahren nach Anspruch 4 oder 7, **dadurch gekennzeichnet, daß** der wenigstens eine andere Verbraucherkreis (z. B. II) aus dem einen höheren Druck aufweisenden Verbraucherkreis (V) aufgefüllt wird.

9. Verfahren nach Anspruch 4, **dadurch gekennzeichnet, daß** die Steuerelektronik (57) bei Unterschreiten oder Nichterreichen einer vorgegebenen Druckschwelle den betroffenen Verbraucherkreis (z. B. II) von der Druckluftversorgung abtrennt.

10. Verlahren nach Anspruch 9, **dadurch gekennzeichnet, daß** eine im Fahrerhaus des Fahrzeugs angeordnete Zustandsanzeige der Druckluftanlage von der Steuerelektronik (57) angesteuert wird.

11. Verfahren nach Anspruch 4, **dadurch gekennzeichnet, daß** das Befüllen der Verbraucherkreise (z. B. I, V) bei im Schiebebetrieb befindlichem Antriebsmotor (13) des Fahrzeugs erfolgt.

12. Verfahren nach Anspruch 4, **dadurch gekennzeichnet, daß** das Sicherheitsventil (26) der Druckluftanlage von der Steuerelektronik (57) in die druckluftabsteuernde Stellung sowie die Sperrglieder der Verbraucherkreise (z. B. I, V) in die Sperrstellung schaltbar sind.

13. Verfahren nach Anspruch 4, **dadurch gekennzeichnet, daß** der Luftkompressor (11) mit einer von der Steuerelektronik (57) schaltbaren Kupplung (12) mit seinem Antriebsmotor (13) verbindbar ist.

14. Verfahren nach Anspruch 4, **dadurch gekennzeichnet, daß** der Luftkompressor (11) von der Steuerelektronik (57) auf Leerlaufbetrieb umschaltbar ist.

15. Verfahren nach Anspruch 4, **dadurch gekennzeichnet, daß** die für die Regeneration des in der Druckluft-Versorgungseinrichtung (102) angeordneten Lufttrockners (18) benötigte Luft dem auf dem höchsten Druckniveau befindlichen Verbraucherkreis (z. B. V) entnommen wird, während das dem wenigstens einen anderen Verbraucherkreis (z. B. I) zugeordnete Sperrglied in der Schließstellung gehalten wird.

16. Verfahren nach Anspruch 4, **dadurch gekennzeichnet, daß** die Regenerationsluft für den Lufttrockner (18) aus dem nach der vorangegangenen Regeneration mit Druckluft erstbefüllten Verbraucherkreis (z. B. I) entnommen wird.

17. Verfahren nach Anspruch 4, **dadurch gekennzeichnet, daß** die Regenerationsluft einem an den Lufttrockner (18) angeschlossenen Regenerationsluftbehälter (20) entnommen wird.

18. Verfahren nach Anspruch 15, 16, oder 17, **dadurch gekennzeichnet, daß** die Regenerationdauer von der Steuerelektronik (57) luftmengenabhängig, druckabhängig, zeitabhängig oder feuchteabhängig gesteuert wird.

19. Verfahren nach Anspruch 15, 16, 17 oder 18, **dadurch gekennzeichnet, daß** die Regeneration des Lufttrockners (18) von der Steuerelektronik (57) nach dem Abstellen des Fahrzeugs gesteuert wird, indem das vorsteuerbare Sicherheitsventil (26) in seine Durchlaßstellung und im Falle der Regenerationsluftentnahme aus einem Verbraucherkreis (z. B. I) das Sperrglied des wenigstens einen anderen Verbraucherkreises (z. B. V) in die Sperrstellung geschaltet wird, und daß bei Beendigung der Regeneration das Sicherheitsventil (26) und das Sperrglied umgeschaltet werden.

## Claims

1. Compressed-air supply arrangement (10.2) for vehicle compressed-air systems, having the following features:
- an air compressor (11) is provided, from the outlet of which, for the purpose of supplying the compressed-air system, a feed conduit (17) leads to an air drier (18),
- a safety valve (26) whose outlet forms a pressure relief point (24) is connected to the feed conduit (17),
- at least one compressed-air consumer circuit (for example, I), the pressure of which is monitored by a pressure sensor (54.1), is connected on the outlet side of the air drier (18) to the feed conduit (17),
- control electronics (57) are provided, to which the pressure sensor (54.1) and at least one solenoid valve (44.5) are connected for controlling the regeneration of the air drier (18) and which controls the feed of compressed air to the air compressor (11), **characterized by** the further features:
- the feed conduit (17) is branched, on the outlet side of the air drier (18), into conduit branches (17.1, 17.5) leading to at least two consumer circuits (for example, I, V),
- the consumer circuits (I, V) can be isolated from the compressed-air supply by means of a stop member switchable by the programmable control electronics (57) and located in the respective conduit branch (17.1, 17.5), where the stop member is a shut-off valve (66.1, 66.5) arranged in the conduit branch (17.1, 17.5), and where the latter is a 2/2-way valve (66.1, 66.5) arranged in the conduit branch (17.1, 17,5) upstream or downstream of an overflow valve (65.1, 65.5) and having a spring-actuated pass position, and where the control electronics (57) are connected to the engine control of the vehicle via a data bus (59).

2. Compressed-air supply arrangement according to Claim 1, **characterized in that** an actuating means for a coupling for isolating the air compressor from its drive motor is connected to the control electronics (57).

3. Compressed-air supply arrangement according to Claim 1, **characterized in that** an actuating means for controlling the air compressor into its no-load position is connected to the control electronics (57).

4. Method for controlling a compressed-air supply arrangement (10.2) for vehicle compressed-air systems according to Claim 1, control electronics (57) being provided, which control the compressed-air supply to the compressed-air system as a function of the pressure in at least one compressed-air consumer circuit (for example, I), **characterized by** the further features:
- the pressure is monitored in at least two consumer circuits (for example, I, V) by the control electronics (57),
- the control electronics (57) isolate the consumer circuits (I, V) from the compressed-air supply as a function of a circuit-dependent programmed limiting pressure,
- the control electronics (57) connect the respective consumer circuit (I, V) to the compressed-air supply when the pressure falls short of the limiting pressure by the amount of a programmed pressure difference,
- the control electronics control the filling of the consumer circuit as a function of the pressure in the circuits and of the driving state of the vehicle.

5. Method according to Claim 4, **characterized in that** the control electronics (57) select one consumer circuit (for example, I) for filling with compressed air, whilst the other consumer circuit (V) or the further consumer circuits (II to V) are temporarily isolated from filling.

6. Method according to Claim 5, **characterized in that** the control electronics (57) connect the consumer circuits (I to V) to the compressed-air supply in a programmed sequence.

7. Method according to Claim 5, **characterized in that** one consumer circuit (V) selected by the control electronics (57) is filled to a higher pressure than the at least one other consumer circuit (I).

8. Method according to Claim 4 or 7, **characterized in that** the at least one other consumer circuit (for example, II) is filled from the consumer circuit (V) having a higher pressure.

9. Method according to Claim 4, **characterized in that** the control electronics (57) isolate the affected consumer circuit (for example, II) from the compressed-air supply when the pressure falls short of or does not reach a predetermined pressure threshold.

10. Method according to Claim 9, **characterized in that** a compressed-air system state indicator arranged in the driver's cab of the vehicle is activated by the control electronics (57).

11. Method according to Claim 4, **characterized in that** the consumer circuits (for example, I, V) are filled when the drive motor (13) of the vehicle is in the coasting mode.

12. Method according to Claim 4, **characterized in that**, by the control electronics (57), the safety valve (26) of the compressed-air system can be switched into the compressed-air spilling position and the stop members of the consumer circuits (for example, I, V) can be switched into the stop position.

13. Method according to Claim 4, **characterized in that** the air compressor (11) can be connected to its drive motor (13) by means of a coupling (12) switchable by the control electronics (57).

14. Method according to Claim 4, **characterized in that** the air compressor (11) can be changed over to the no-load mode by the control electronics (57).

15. Method according to Claim 4, **characterized in that** the air required for regenerating the air drier (18) arranged in the compressed-air supply arrangement (10.2) is extracted from the consumer circuit (for example, V) which is at the highest pressure level, whilst the stop member assigned to the at least one other consumer circuit (for example, I) is held in the closing position.

16. Method according to Claim 4, **characterized in that** the regenerating air for the air drier (18) is extracted from the consumer circuit (for example, I) first filled with compressed air after the preceding regeneration.

17. Method according to Claim 4, **characterized in that** the regenerating air is extracted from a regenerating-air reservoir (20) connected to the air drier (18).

18. Method according to Claim 15, 16 or 17, **characterized in that** the regenerating duration is controlled by the control electronics (57) as a function of the air quantity, of pressure, of time or of moisture.

19. Method according to Claim 15, 16, 17 or 18, **characterized in that** the regeneration of the air drier (18) is controlled by the control electronics (57) after the vehicle has been switched off, **in that** the pilot-controllable safety valve (26) is switched into its pass position and, if regenerating air is extracted from one consumer circuit (for example, I), the stop member of the at least one other consumer circuit (for example, V) is switched into the stop position, and **in that** the safety valve (26) and the stop member are changed over when regeneration has ended.

## Revendications

1. Système d'alimentation en air comprimé (10.2) pour installations à air comprimé de véhicules, avec les particularités suivantes
- il est prévu un compresseur d'air (11), à partir de la sortie duquel pour alimenter l'installation à air comprimé une conduite de refoulement (17) mène à un dessiccateur d'air (18),
- à la conduite de refoulement (17) est raccordée une vanne de sécurité (26) d'évacuation vers un point de décharge de la pression (24),
- du côté de la sortie du dessiccateur d'air (18) au moins un circuit d'utilisation à air comprimé (par exemple (1), dont la pression est contrôlée par un détecteur de pression (54.1), est raccordé à la conduite de refoulement (17),
- il est prévu un circuit électronique de commande (57), auquel sont raccordés le détecteur de pression (54.1) et au moins une électrovanne (44.5) servant à commander la régénération du dessiccateur d'air (11) et qui commande le refoulement de l'air comprimé de compresseur d'air (11 ),
**caractérisé par**
les autres particularités suivantes :
- la conduite de refoulement (17) est subdivisée du côté de la sortie du dessiccateur d'air (18) en des branches (17.1, 17.5), qui mènent à au moins deux circuits d'utilisation (par exemple I, V),
- on peut séparer de l'alimentation en air comprimé les circuits d'utilisation (I, V) au moyen d'un organe d'obturation, qui peut être commandé par le circuit électronique de commande (57) , et qui se trouve dans la branche respective (17.1, 17.5) de la conduite, l'organe d'obturation est une vanne d'obturation (66.1, 66.5), qui est disposée dans la branche (17.1, 17.5) de la conduite, l'organe d'obturation étant un distributeur à 2/2 voies (66.1, 66.5) avec une position de passage actionnée par un ressort, distributeur qui est disposé dans la branche (17.1, 17.5) de la conduite avant ou après une vanne de décharge (65.1, 65.5), et le circuit électronique de commande (57) est relié au moyen d'un bus de données (59) à la commande du moteur du véhicule.

2. Système d'alimentation en air comprimé selon la revendication 1,
**caractérisé en ce qu'**
un moyen d'actionnement d'un embrayage, qui sert à séparer le compresseur d'air de son moteur d'entraînement est raccordé au circuit électronique de commande (57).

3. Système d'alimentation en air comprimé selon la revendication 1,
**caractérisé en ce qu'**
un moyen d'actionnement, qui sert à commander le compresseur d'air est raccordé dans sa position de ralenti au circuit électronique de commande (57).

4. Procédé servant à commander un système d'alimentation en air comprimé (10.2) pour des installations à air comprimé de véhicules, selon la revendication 1, un circuit électronique de commande (57) étant prévu, circuit qui commande en fonction de la pression dans au moins un circuit d'utilisation de l'air comprimé (par exemple I) l'alimentation en air comprimé,
**caractérisé par**
les autres particularités suivantes :
- la pression est contrôlée par le circuit électronique de commande (57) dans au moins deux circuits d'utilisation (par exemple I, V)
- le circuit électronique de commande (57) sépare les circuits d'utilisation (I, V) en fonction d'une pression de limitation qui dépend du circuit et est programmée, de l'alimentation en air comprimé,
- le circuit électronique de commande (57) relie le circuit d'utilisation correspondant (I, V) quand la pression de limitation tombe en dessous de la pression de l'alimentation en air comprimé d'un différence de pression programmée.
- le circuit électronique de commande (57) commande le remplissage des circuits d'utilisation (par exemple I, V) en fonction de la pression dans les circuits et de l'état de marche du véhicule.

5. Procédé selon la revendication 4,
**caractérisé en ce que**
le circuit électronique de commande (57) sélectionne un circuit d'utilisation (par exemple I) pour le remplissage en air comprimé, tandis que l'autre circuit d'utilisation (V) ou les autres circuits d'utilisation (I à V) sont séparés dans le temps du remplissage.

6. Procédé selon la revendication 5, **caractérisé en ce que**
le circuit électronique de commande (57) relie les circuits d'utilisation (I à V) dans un ordre programmé à l'alimentation en air comprimé.

7. Procédé selon la revendication 5,
**caractérisé en ce qu'**
un circuit d'utilisation (V), sélectionné par le circuit électronique de commande (57) est rempli à une pression plus élevée que l'un au moins des autres circuits d'utilisation (1).

8. Procédé selon la revendication 4 ou 7,
**caractérisé en ce que**
l'un au moins des autres circuits d'utilisation (par exemple II) est rempli à partir du circuit d'utilisation (V) qui présente une pression plus élevée.

9. Procédé selon la revendication 4,
**caractérisé en ce que**
le circuit électronique de commande (57) sépare le circuit d'utilisation concerné (par exemple II) de l'alimentation en air comprimé lorsqu'un seuil de pression prédéfini est sous-dépassé ou n'est pas atteint.

10. Procédé selon la revendication 9,
**caractérisé en ce que**
le circuit électronique de commande (57) actionne un indicateur de l'êtat de l'installation à air comprimé, indicateur qui est disposé dans la cabine du conducteur du véhicule.

11. Procédé selon la revendication 4,
**caractérisé en ce que**
le remplissage des circuits d'utilisation (par exemple V) a lieu quand le moteur d'entraînement (13) du véhicule se trouve en poussée.

12. Procédé selon la revendication 4,
**caractérisé en ce que**
la vanne de sécurité (26) de l'installation à air comprimé peut être mise par le circuit électronique de commande (57) dans la position d'évacuation de l'air comprimé et **en ce que** les organes d'obturation des circuits d'utilisation (par exemple I, V) peuvent être mis dans leur position d'obturation.

13. Procédé selon la revendication 4,
**caractérisé en ce que**
le compresseur d'air (11) peut être relié par un embrayage (12) qui peut être commandé par le circuit électronique de commande (57) à son moteur d'entraînement (13).

14. Procédé selon la revendication 4,
**caractérisé en ce que**
le circuit électronique de commande (57) peut taire passer le compresseur d'air (11) sur sa marche au ralenti.

15. Procédé selon la revendication 4,
**caractérisé en ce que**
l'air qui est nécessaire pour la régénération du dessiccateur d'air (18), qui est disposé dans le système d'alimentation en air comprimé (10.2), est enlevé au circuit d'utilisation (par exemple V), qui se trouve au niveau de pression le plus élevé, tandis que l'organe d'obturation (40.1), associé à au moins un autre circuit d'utilisation (par exemple I) , est maintenu dans sa position de fermeture.

16. Procédé selon la revendication 4,
**caractérisé en ce que**
l'air de régénération pour le dessiccateur d'air (18) est enlevé à partir du circuit d'utilisation, qui a été rempli le premier d'air comprimé après la régénération précédente.

17. Procédé selon la revendication 4,
**caractérisé en ce que** l'air de régénération (20), qui est raccordé au dessiccateur d'air (18).

18. Procédé selon la revendication 15, 16 ou 17,
**caractérisé en ce que**
la durée de la régénération est commandée par le circuit électronique de commande (57) en fonction de la quantité d'air, en fonction de la pression, en fonction du temps ou en fonction de l'humidité.

19. Procédé selon la revendication 15, 16, 17 ou 18,
**caractérisé en ce que**
la régénération du dessiccateur d'air (18) est commandée par le circuit électronique de commande (57) après l'arrêt du véhicule, après avoir mis la vanne de commande de sécurité (26) dans sa position de passage et **en ce que** dans le cas de l'enlèvement de l'air de régénération à partir d'un circuit d'utilisation (par exemple I) l'organe d'obturation de l'un au moins des autres circuits d'utilisation (par exemple V) est mis dans sa position d'obturation, et **en ce que**, quand la régénération est terminée, on inverse la vanne de sécurité (26) et l'organe d'obturation.
